# EUROPEAN PATENT APPLICATION

(11) **EP 2 741 246 A1**
(43) Date of publication of application: **11.06.2014**
(21) Application number: 12008167.4
(22) Date of filing: 06.12.2012
(51) Int. Cl.: G06Q 20/32, G06F 9/455

(54) **Method and apparatus for providing a graphical user interface**

(71) Applicant: Giesecke & Devrient GmbH, 81677 München (DE)
(72) Inventor: Vui Huang, Tea, SE-12061 Stockholm (SE)

(57) **Abstract**

A method for providing a graphical user interface on a portable end device (100) for interaction with an application (12) on a security element (10) integrated into the end device (100) comprises the following steps: The application generates (S1) a user interface definition data set (200) such that a user interface rendering data set (300) that is derivable from the user interface definition data set (200) through the end device (100) permits a rendering of the user interface through the end device (100), and such that a change of the user interface is possible by means of a change of the user interface definition data set (200) and without any change on the end device (100) side. Then the security element (10) transfers the user interface definition data set (200) to the end device (100), where a user interface rendering data set (300) is derived from the same. The end device (100) finally displays the graphical user interface on the end device (100) on the basis of the user interface rendering data set (300).

## Description

The present invention relates to a method for providing a graphical user interface on a portable end device for interaction with an application on a security element integrated into the end device, to a corresponding security element and to a corresponding end device.

Security elements, for example SIM or UICC mobile radio cards, which are suitable for being integrated into portable end devices, such as for example smartphones, tablets or mobile radio end devices, can be used to store and to execute security-relevant applications, for example payment applications, in secure fashion. For an interaction of a user of the end device with such an application, an interface to the application is necessary. Such an interface is preferably provided today via a graphical user interface.

A relatively simple, i.e. graphically not especially appealing, form of user interface can be provided by employing SIM application toolkit commands that have been known for some time. However, the appearance of such a user interface seems rather antiquated in combination with smartphones and the like that are common today. Further, the range of functions provided by the SIM application toolkit commands is very restricted.

Graphically more sophisticated user interfaces with a rich range of functions can in principle be provided by a smart-card web server on the security element dynamically generating HTML pages and sending them to the end device. There, these pages can be displayed as an accurately detailed user interface with a rich range of functions by means of a browser. A great disadvantage of this approach is that large amounts of data (corresponding to the generated HTML pages) must be transferred from the security element to the end device. The communication protocols to be employed for such a data communication, such as for example T=0 or T=1, are not suited for transferring large amounts of data. Accordingly, such a method would be very slow, with all the resulting disadvantages for the user.

Finally, it is possible to provide complex graphical user interfaces employing so-called "widgets", derived from the terms "window" and "gadget". Widgets - in the present context - are elements of a graphical user interface that permit an interaction with an application associated with the widget, for example buttons, check fields, menus, icons, text input fields or the like. Widgets are specific to the end device and dependent on a hardware and software environment of the end device. This in the present context has the serious disadvantage that when the graphical user interface associated with an application is to be changed or adapted, it is necessary to update not only the application on the security element, but always also the corresponding portion of the application on the end device. In so doing, it may become necessary to change the user interface for example by adding a new selection option or display option. The application on the security element normally delivers data to be displayed via the user interface. The part of the overall application that is executed on the end device and is responsible for the graphic design of the user interface can be provided for example in the form of an Android app or the like. The constant need to synchronize corresponding versions of the portions of the application on the security element and the end device requires effort not only from the service provider with regard to providing the respective current and compatible versions, but also from the user, who must always install current updates so as not to risk the overall application being inoperable. Each mobile operating system generally has its own distinct and proprietary process as well as a closed cloud/network delivery system of updating widgets, making support for multiple platforms tedious and costly to maintain.

The object of the present invention is to take account of the disadvantages of the prior art and propose a method that makes it possible to effectively provide on an end device a complex graphical user interface with a rich range of functions for interaction with an application on a security element of the end device. In particular it should be updated solely via the mobile operator's network, removing dependency on phone vendor's proprietary cloud network and closed app stores.

This object is achieved by a method, a security element and an end device having the features of the independent claims. Advantageous embodiments and developments are stated in the dependent claims.

A method according to the invention for providing a graphical user interface on a portable end device for interaction with an application on a security element integrated into the end device comprises the following steps:

The application on the security element generates a user interface definition data set for defining the user interface. A definition of the user interface here comprises both any logic, i.e. any instructions that are necessary for building the user interface, and the data to be displayed via the user interface. The user interface definition data set is generated by the application such that, on the one hand, a user interface rendering data set that is derivable from the user interface definition data set in predefined fashion through the end device, and is different from the user interface definition data set, permits a rendering of the user interface through the end device. On the other hand, the generation of the user interface definition data set is effected such that a change of the user interface, both with respect to the build and with respect to the data to be displayed, is possible solely by means of a change of the user interface definition data set and without any change on the end-device side.

In a further step, the security element transfers the user interface definition data set to the end device.

After a receiving of the user interface definition data set through the end device, the end device derives the user interface rendering data set from the user interface definition data set.

Finally, the end device displays the graphical user interface on the basis of the previously derived user interface rendering data set on an output device of the end device, for example a display screen.

Preferably, the graphical user interface prompts the user for input, e.g. manual input (text, data, PIN) and/or user selection. The received user input may be send to the secure element.

Moreover, the user interface rendering data may comprise application logic, e.g. in the form of logic code. In particular, user input will be processed in accordance with the logic code contained in the user interface rendering data. The processed user input will be sent back to the secure element if needed. Some user input may not be sent back to the secure element as it can be processed by the logic code contained in the user interface rendering data, for example the user input could be a request to display the same data in a different way (e.g. from ascending to descending sorting order).

Accordingly, a security element according to the invention which is suitable for being integrated into a portable end device temporarily, i.e. in particular removably, or permanently, i.e. normally firmly installed, comprises an application that is executable on the security element, wherein an interaction with the application can take place via a graphical user interface on the end device. The application is set up to generate a user interface definition data set such that a user interface rendering data set that is derivable from the user interface definition data set in predefined fashion permits a rendering of the user interface through the end device, and that a change of the user interface is possible by means of a change of the user interface definition data set and without any change on the end-device side. Further, the security element is set up to transfer the user interface definition data set generated by the application to the end device.

A portable end device according to the invention, set up for providing a graphical user interface for interaction with an application on a security element integrable temporarily or permanently into the end device, comprises a deriving device for deriving a user interface rendering data set from a user interface definition data set received from the security element. Further, the end device comprises a display device, for example a browser, for displaying the user interface via an output device of the end device on the basis of the derived user interface rendering data set.

The user interface definition data set is preferably generated here such that its data volume is minimized, so that a transfer of corresponding data to the end device can be effected fast.

In particular, the user interface definition data set can be generated in the form of an executable or interpretable program code, for example as JavaScript program code or as WIB byte code.

Alternatively, the user interface definition data set can be generated by compressing the corresponding user interface rendering data set already generated through the application in a preceding step. The type of the compression employed can be coordinated with the type of the user interface rendering data set. For example, the compression of a marking language such as HTML or the like, may be particularly suited for forming a user interface rendering data set.

The procedure according to the invention has numerous advantages.

As mentioned above, the data transfer between security element and end device can be carried out fast, because a data volume to be transferred is minimized.

Further, any change of the graphical user interface can be obtained solely by an adaptation of the user interface definition data set. In other words, only the application generating the user interface definition data set must be adapted accordingly. All the devices of the end device that support the build and the display of the user interface there can remain unchanged, i.e. there is in particular no need for an adaptation of the application portion on the end-device side. This for example makes it possible for an issuer of the security element, such as e.g. a mobile communication provider, to adapt an application on the security element, without any need for the user's cooperation, for the purpose of changing or adapting a user interface for operating the application, for example via the over-the-air interface (OTA).

On the side of the application provider of the end-device-side application portion there is a substantial decrease in development effort, because it is only necessary to provide a version which is set up to convert a user interface definition data set received from the security element into a corresponding user interface rendering data set. Depending on the type of the user interface definition data set, there is only required for this purpose a suitable deriving device. This may be an environment for executing or interpreting the program code which corresponds to the user interface definition data set, for example a respective suitable virtual machine, e.g. a Lua VM or a WIB byte code interpreter. For further decrease in development effort, the respective VM itself could be written in a portable, multi-platform format such as JavaScript. In the event that the user interface definition data set is present as a compressed user interface rendering data set, a decompressing device is sufficient. Finally, the end device or the end-device-side portion of the application requires a display device for displaying a data set in the format of the user interface rendering data set, for example a web browser for displaying HTML documents or a device for displaying a display format specific to the end device.

The fundamentally free definability of the user interface definition data set permits a broad applicability of the method as well as the operation of novel applications on the security element - in the hereinabove described fashion independently of the software and hardware equipment of the end device.

Finally, for carrying out the method according to the invention it is possible to employ basically without exception known and already proved technologies and partial methods which are advantageously combined here in a new fashion according to the invention. This limits the effort for adapting existing apparatuses and methods.

Preferably, upon generation of the user interface definition data set the application employs templates already stored in the security element. In this way the effort for generating the user interface definition data set can be reduced and the runtime of the method shortened.

According to a preferred embodiment, the application on the security element can be provided as a portion, that is stored and to be executed in the security element, of a so-called wallet application. Such a wallet application, whose end-device-side portion is stored and executed on the end device, offers a user of the end device a common interface to different, normally independent applications on the security element, such as e.g. payment, ticketing or customer-card applications. These applications can be added to the wallet or removed therefrom again through the user by his own selection. The wallet application is represented on the end device by an overall graphical user interface. That graphical user interface that serves for interaction with the application according to the invention and that can be displayed on the basis of the user interface rendering data set according to the invention constitutes a portion of this overall user interface.

The present invention will hereinafter be described by way of example with reference to the attached drawings. Therein are shown:
Figure 1 components involved in a preferred embodiment of the method according to the invention, and
Figure 2 steps of a preferred embodiment of the method according to the invention.

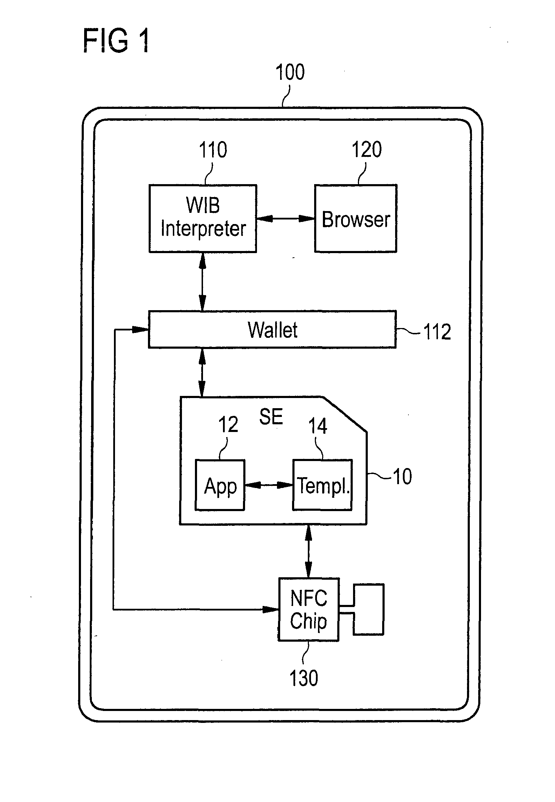

In Fig. 1 a portable end device 100 is shown by way of example as a smartphone. Alternatively there can be employed similar devices, for example a mobile radio end device, a tablet, a notebook or the like.

The end device 100 has a security element 10 integrated thereinto. The security element 10 is indicated in the shown example as a SIM/UICC mobile radio card. The security element 10 is integrated into the end device 10 removably, and hence in principle only temporarily, and could for example also be present as a secure memory card or the like. As an alternative to a removably integrated security element 10, the end device 100 could also be equipped with a firmly installed, i.e. permanently integrated, security element 10, for example an embedded SIM/UICC mobile radio card, a TPM, an NFC module or the like. Finally, a secure runtime environment within a specific hardware architecture of the end device, for example as a "Trusted Execution Environment" according to the "Global Platform" specification, could also serve as a security element 100.

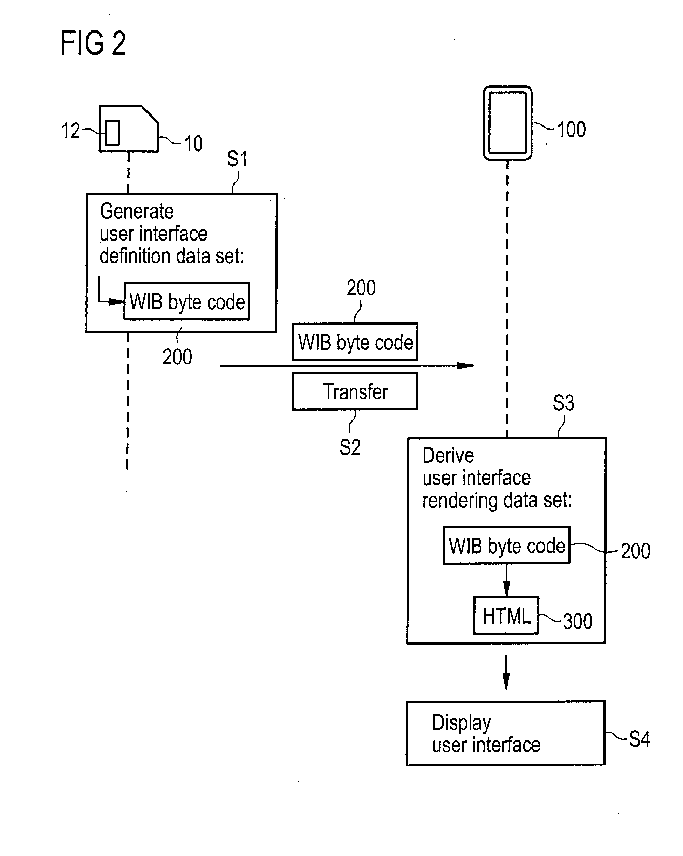

The security element 10 comprises an application 12 which can support a specific user application, for example a payment or ticketing application or the function of an electronic customer card or the like. Sensitive data which can be processed by the application 12 on the security element 10 can additionally be stored securely on the security element 10, such as e.g. credit-card data, electronic money amounts or the like. Further functionalities of the application 12, which can be present for example in the form of a JavaCard application, in connection with a method for providing a graphical user interface for interaction with the application 12, employing special templates 14 where applicable, will hereinafter be described in detail with reference to Fig. 2.

Stored on the end device 100 and executable on a processor (not shown) of the end device 100 is a so-called wallet application 112. This application serves a user of the end device 100, on the one hand, as a common interface to a number of applications on the security element 10, such as for example the application 12. Further applications (not shown) corresponding to the application 12 can have been stored on the security element 10 or be subsequently stored there by the user of the end device 100. For a provider of such an application 12, for example a bank, a credit-card enterprise or the like, the wallet application 112 offers a uniform runtime environment which makes it possible in a simple manner to provide a user with a corresponding application 12. Hence, the application 12 on the security element 10 and the wallet application 112 on the end device can be considered different, interacting components of an overall application again designated as a wallet application. The application 12 is then also designated as a "card" of the (digital) "wallet" 200, by analogy with a credit card, for example, which is kept in a conventional, non-digital pocket wallet.

The wallet application 112 can be provided on the end device 100 for example in the form of an Android app or the like. Adaptations can be made to different end devices and/or to different end-device operating systems.

User applications which can be provided by the application 12 and similar applications on the security element 10 in combination with the wallet application 200 on the end device 100 can be used especially advantageously when the end device 100 or the security element 10 supports a suitable near-range communication protocol, in particular according to the NFC standard. In this way, for example payment transactions can be carried out very fast and simply. Hence, the wallet application 112 can be set up to communicate with an NFC chip 130 of the end device 100 and thereby provide a contactless data communication interface for an application 12.

Further, the end device 100 comprises a deriving device 110 which is shown by way of example as a WIB byte code interpreter, and whose functionality will be precisely described with reference to Fig. 2.

A display device 120, such as for example a web browser, serves, as described hereinafter with reference to Fig. 2, for displaying a graphical user interface on the basis of a data set which is provided by the deriving device as described hereinafter.

When a user of the end device 100 wishes to utilize the wallet application 112 in combination with one or several applications 12 on the security element 10, he can proceed by way of preparation for example as follows.

The user decides on a wallet application 112 of a certain operator. The latter then provides the user with a corresponding security element 10, for example in the form of a SIM mobile radio card. This card 10 can comprise an NFC module, if the user's end device 100 does not already comprise such a module 130. Subsequently the user loads the wallet application 112 to his end device 100, for example from an "app store" or from the operator's web page. The user can now add arbitrary "cards" to the "wallet", in other words, load to the security element 10 arbitrary suitable applications 12 which can support desired user applications in combination with the wallet application 112. The wallet application can support this selection by a number of loadable applications 12 being displayed in selectable fashion.

The loading and installing of an application 12 is then normally effected by means of a so-called "wallet manager", a server that is operated by the operator issuing the wallet application 112. Using this server, the selected application 12 and further, necessary data can then be loaded into the security element 10 in secure fashion and be installed there, for example via the over-the-air interface (OTA). On the same route, or through the intermediary of a mobile communication provider, an updating of the application 12 can also be effected later through the wallet manager or the provider or issuer of the application 12.

To now be able to utilize an installed application 12, the user starts the wallet application 112 on his end device 100.

The wallet application 112 contacts the security element 10 to ask for a list of available applications 12 and displays it to the user.

The user thereupon selects for example the application 12. Thereupon the wallet application 112 starts the application 12 on the security element, for example by means of a corresponding start command.

Subsequent steps for providing a graphical user interface on the end device 100 for interaction with the application 12 on the security element 10 will hereinafter be described in detail with reference to Fig. 2.

In a first step S1 the application 12 generates a user interface definition data set 200. In the illustrated example, the user interface definition data set 200 is provided in the form of interpretable program code, namely in the form of WIB byte code.

WIB byte code is originally known in connection with the transfer of data or applications coded in WML or XML. WML was converted to WIB byte code and thereafter transferred to SIM mobile radio cards. The cards interpreted it by means of a corresponding WIB byte code interpreter and at least partly translate it into SIM application toolkit commands.

Other forms of executable or interpretable program code can alternatively be employed, for example Lua/JavaScript program code.

The user interface definition data set 200 is characterized by comprising all the information that is subsequently required on the end device 100 side for outputting the graphical user interface. That is to say, the user interface definition data set 200 contains both instructions defining the build and appearance of the user interface, and data that are to be displayed to the user of the end device 100 via the user interface. Hence, a change or adaptation of the user interface can be effected solely through a corresponding adaptation of the user interface definition data set 200, without requiring any adaptations on the side of the end device 100 and/or applications 112 installed there. This will be described more precisely hereinafter.

For generating the user interface definition data set 200, the application 12 can make use of different templates 14 stored on the security element 10. In this way the computation effort of the application 12 can be reduced and the time until provision of the user interface definition data 200 shortened. Corresponding templates 14 can be stored in the security element 10 for example by the hereinabove mentioned wallet manager server at the time of loading of the application 12.

In step S2 the security element 10 transfers the user interface definition data set 200 by means of a corresponding transfer application, or the application 12 transfers it by means of a specially provided functionality, to the wallet application 112 executed on the end device 100, for example as a data portion of a response command in response to the received start command.

The wallet application 112 relays the user interface definition data set 200 to the deriving device 110 of the end device 100. In the described example, the deriving device 110 is configured as a WIB byte code interpreter. A user interface definition data set 200 which is encoded as program code of a different type accordingly requires an adapted deriving device 110 on the end device 100, for example a virtual machine set up for executing JavaScript, or the like. Preferably, the data format in which the user interface definition data set 200 is present is executable or interpretable independently of platform. In this way an application 12 (on a security element 10) can work together with different types of end devices unchanged. Only the deriving device 110 must be adapted a single time to the requirements of the end device 100, for example with respect to the hardware employed there, an operating system executed there, or the like.

The WIB byte code interpreter 110 processes the user interface definition data set 200, i.e. interprets the corresponding WIB byte code 200. In so doing, the WIB byte code interpreter 110 derives a user interface rendering data set 300 from the WIB byte code 200 in step S3. This data set is in particular different from the user interface definition data set 200. In the present example, the user interface rendering data set is an HTML document. Other suitable formats, for example other common marking languages based on XML, can likewise be used.

Alternatively, the user interface rendering data set 300 can also be present in a format specific to the end device, however, for example adapted to a device-specific GUI-API.

The user interface rendering data set 300 is subsequently relayed to a display device 120 of the end device 100, for example a web browser 120. Using the latter, the information originally defined by means of the user interface definition data set 200 and now present in the form of the derived user interface rendering data set 300 can be displayed and output as a graphical user interface on an output device of the end device 100, for example a display screen, in step S4. In this way, information can be displayed to the user and/or a user's input requested; in other words, there can be made possible an interaction with the application 12.

The WIB byte code interpreter 110 can process a user's input on the basis of the WIB byte code 200. This can be effected with and without data communication with the application 12 on the security element 10, depending on the type of the application. If a communication with the application 12 is required, this is preferably effected through the intermediary of the wallet application 112, which is set up for a communication with the application 12.

The user interface rendering data set 300 allows the end device 100 to off-load and handle user inputs not involving or requiring the security element 10. If user input requires a response or processing by the security element 10, the end device 100 transfers the user input to the security element. User input can be any data that is directly entered by the user (e.g. keyboard, finger touch or swipe, or stylus taps/sketches/drawings) or indirectly entered by the user and received as an event-trigger, a sensor reading (e.g. accelerometer, GPS etc) from the end device 100, or internal/external accessories directly or wirelessly connected to the end device 100.

## Claims

1. A method for providing a graphical user interface on a portable end device (100) for interaction with an application (12) on a security element (10) integrated into the end device (100), comprising the steps of:
- generating (S1) a user interface definition data set (200) for defining the user interface through the application (12) on the security element (10) such that
a user interface rendering data set (300) derivable from the user interface definition data set (200) permits a rendering of the user interface through the end device (100), and that
a change of the user interface is possible by means of a change of the user interface definition data set (200) and without any change on the end device (100) side;
- transferring (S2) the user interface definition data set (200) to the end device (100) through the security element (10);
- deriving (S3) the user interface rendering data set (300) from the user interface definition data set (200) through the end device (100); and
- displaying (S4) the user interface through the end device (100) on the basis of the user interface rendering data set (300).

2. The method according to claim 1, **characterized in that** the user interface definition data set (200) is generated in the form of interpretable program code.

3. The method according to claim 2, **characterized in that** the user interface definition data set (200) is generated as executable, compiled or interpreted code such as Lua, JavaScript program code or as WIB byte code.

4. The method according to claim 2 or 3, **characterized in that** the end device (100) executes or interprets the program code by means of a suitable deriving device (110), preferably a suitable virtual machine, in order to derive the user interface rendering data set (300) from the user interface definition data set (200).

5. The method according to claim 1, **characterized in that** the user interface definition data set (200) is generated by compressing the corresponding user interface rendering data set (300) that is then derivable from the user interface definition data set (200) by decompressing.

6. The method according to claim 5, **characterized in that** the end device (100) decompresses the user interface definition data set (200) by means of a suitable decompressing device in order to derive therefrom the user interface rendering data set (300).

7. The method according to any of claims 1 to 6, **characterized in that** the application (12) employs templates (14) stored in the security element (10) upon the generating of the user interface definition data set (200).

8. The method according to any of claims 1 to 7, **characterized in that** one or several HTML documents are derived from the user interface definition data set (200) as the user interface rendering data set (300).

9. The method according to any of claims 1 to 8, **characterized in that** the application (12) is provided as a portion, that is stored and to be executed on the security element (10) side, of a wallet application, wherein a further portion (112) of the wallet application is stored and executed on the end device (100), and wherein the graphical user interface renders a portion, associated with the application (12), of an overall graphical user interface which represents the wallet application on the end device (100).

10. The method according to any of claims 1 to 9, **characterized in that** user input received in response to the displayed user interface is send back to the security element (10).

11. The method according to any of claims 1 to 10, **characterized in that** the user interface definition data set (200) comprises instructions how to process received user input.

12. A security element (10), suitable for temporary or permanent integration into a portable end device (100), comprising an application (12) executable on the security element (10), wherein an interaction with the application (12) can take place via a graphical user interface on the end device (100), and wherein the application (12) is set up to
generate a user interface definition data set (200) for defining the user interface such that
a user interface rendering data set (300) derivable from the user interface definition data set (200) permits a rendering of the user interface through the end device (100), and that
a change of the user interface is possible by means of a change of the user interface definition data set (200) and without any change on the end device (100) side, and
wherein the security element (10) is set up to transfer the user interface definition data set (200) generated by the application (12) to the end device (100).

13. The security element (10) according to claim 12, **characterized in that** the security element (10) is set up to support a method according to any of claims 1 to 8.

14. A portable end device (100), set up for providing a graphical user interface for interaction with an application (12) on a security element (10) integrable into the end device (100) permanently or temporarily, comprising
a deriving device (110) for deriving a user interface rendering data set (300) from a user interface definition data set (200) received from the security element (10); and
a display device (120) for displaying the user interface on the basis of the derived user interface rendering data set (300).

15. The end device (100) according to claim 14, set up for carrying out a method according to any of claims 1 to 9.

16. The end device (100) according to claim 14 or 15, having integrated therein a security element (10) according to either of claims 12 to 13.
